Europäisches Patentamt

European Patent Office

Office européen des brevets

(19)

(11) Numéro de publication: **0 498 869 B1**

## (12) FASCICULE DE BREVET EUROPEEN

(45) Date de publication de fascicule du brevet: **28.06.95**

(51) Int. Cl.6: **C11B 3/00**, A23C 15/14, A23L 1/015

(21) Numéro de dépôt: **91916049.9**

(22) Date de dépôt: **04.09.91**

(86) Numéro de dépôt internationale : **PCT/FR91/00707**

(87) Numéro de publication internationale : **WO 92/04430 (19.03.92 92/07)**

(54) **PROCEDE D'EXTRACTION DE COMPOSES MINEURS GRAS CONTENUS DANS UNE MATIERE D'ORIGINE BIOLOGIOUE.**

(30) Priorité: **04.09.90 FR 9010969**

(43) Date de publication de la demande: **19.08.92 Bulletin 92/34**

(45) Mention de la délivrance du brevet: **28.06.95 Bulletin 95/26**

(84) Etats contractants désignés: **AT BE CH DE DK ES FR GB GR IT LI LU NL SE**

(56) Documents cités:
EP-A- 0 326 469
EP-A- 0 387 708
US-A- 3 491 132

(73) Titulaire: **Roquette Frères**

**F-62136 Lestrem (FR)**

(72) Inventeur: **MENTINK, Léon**
**96, rue du Collège**
**F-59940 Estaires (FR)**
Inventeur: **SERPELLONI, Michel**
**155, route nationale**
**F-62660 Beuvry-lès-Béthune (FR)**

(74) Mandataire: **Boulinguiez, Didier et al**
**Cabinet Plasseraud**
**84, rue d'Amsterdam**
**F-75009 Paris (FR)**

Rank Xerox (UK) Business Services
(3.10/3.09/3.3.3)

## Description

La présente invention concerne un procédé d'extraction de composés mineurs gras, notamment de stéroïdes, et plus particulièrement de cholestérol, contenus dans une matière d'origine biologique.

Par "composés mineurs gras", on désigne tous constituants gras non glycéridiques contenus dans des matières naturelles grasses. Il peut s'agir de stéroïdes, notamment de stérols, d'alcools gras, de vitamines liposolubles, de pigments, d'hydrocarbures, d'acides gras libres, d'acides abiétiques et pimariques, de composés d'arômes...

Pour plus de précision, on se référera à la définition donnée dans le "Manuel d'analyse des corps gras" JP WOLF - Ed Azoulay - Paris 1969, pages 11 et 25.

Au sens de la présente invention, le terme "stéroïdes" désigne tous les composés renfermant un squelette cyclopentanophénanthrénique plus ou moins hydrogéné. Beaucoup de ces composés sont des alcools et sont dénommés stérols. Ils peuvent se présenter sous la forme d'esters notamment d'acides gras, communément désignés par le terme "cérides".

Le cholestérol figure parmi les stérols. On sait depuis longtemps qu'il est le constituant principal des calculs biliaires. Sa notoriété s'est récemment accentuée par sa relation avec les troubles circulatoires, et plus particulièrement le durcissement des artères.

Dans les corps gras d'origine animale, on trouve essentiellement du cholestérol non estérifié. Présents dans la majeure partie de notre alimentation, ces corps gras animaux constituent une source de cholestérol non négligeable qui, en cas d'excès, peut être à l'origine de pathologies cardiovasculaires graves dont notamment l'infarctus du myocarde.

Les corps gras d'origine végétale ne contiennent pas de cholestérol mais des phytostérols de structure très voisine de celui-ci, code par exemple : le $\beta$-sitostérol, le campestérol, le stigmastérol, le brassicastérol, le $\Delta$-7-stigmastérol, le $\Delta$-5-campéstérol, le $\Delta$-5-avénastérol $\Delta$-7-avénastérol, le $\Delta$-7-9-sigmatadiénol, le fucostérol ou l'ergostérol.

Le procédé suivant l'invention s'applique également aux dérivés oxydés des stéroïdes : les stérones. Ces composés se retrouvent notamment dans les huiles de friture utilisées à plusieurs reprises. Leur présence dans les produits alimentaires n'est pas souhaitée car ils ne sont pas dénués d'effet toxique.

En outre, les stéroïdes sont des produits à haute valeur ajoutée tant économique que technique. Ils sont en effet susceptibles de constituer des matières premières de choix pour la préparation de composés vitaminiques (ergostérol : vitamine D2) ou hormonaux (équilénine, oestrone, progestérone, testostérone ou cortisone...). Outre leurs applications pharmaceutiques, les stéroïdes et plus particulièrement les stérols et leurs esters d'acides gras (cérides) peuvent être utilisés dans l'industrie cosmétique comme émulsifiants.

En ce qui concerne les autres composés mineurs gras, on peut distinguer, d'une part, les composés indésirables sur le plan alimentaire ou technologique tels que les acides gras libres favorisant l'oxydation, les composés de dégradation comme les acides polymérisés, les composés fétides, les matières colorantes et de sapidité, ou autres ; et d'autre part, les composés à haute valeur alimentaire ou technologique tels que les vitamines liposolubles, les acides gras essentiels (acides linoléique, $\alpha$-linoléique, $\gamma$-linoléique, arachidonique, DHA, EPA), les acides gras rares (acides ricinoléique, abiétique), les composés d'arômes.

C'est donc à plusieurs titres que se justifient tous les développements techniques visant à extraire les composés mineurs gras de matières biologiques grasses. Sous ce terme, on désigne en particulier, d'une part, les matières grasses animales, quelles soient de réserve comme les huiles de poissons ou les huiles animales (suif, gras de volailles, saindoux...), de structure comme celles contenues dans les tissus musculaires, placentaires ou nerveux (viande, oeuf, moelle épinière, cerveau...) ou de sécrétion glandulaire comme les matières grasses laitières, ou de sécrétion dermique comme les cérides (lanoline) ; et, d'autre part, les matières grasses végétales. Enfin, il peut s'agir d'un mélange de matières grasses animales et de matières grasses végétales commes les margarines.

Il a ainsi déjà été proposé diverses méthodes d'extraction de composés mineurs gras de matières biologiques contenant des graisses.

En premier lieu, il existe des techniques d'extraction de stéroïdes, notamment de cholestérol.

L'une d'elles consiste à mettre en contact de la matière grasse d'origine animale avec de la digitonine (glucoside de la digitogénine), qui a la propriété de réagir avec le cholestérol pour donner un précipité insoluble. Les performances et les résultats de cette méthode ne sont pas satisfaisants, du fait de la difficulté de séparation du précipité du milieu. Et en tout état de cause, cette méthode est inapplicable industriellement, notamment pour des produits alimentaires.

Le cholestérol peut également être extrait des matières grasses par entraînement à l'aide d'un solvant. L'inconvénient majeur de ce procédé est que les solvants généralement employés sont toxiques et qu'il en reste toujours des traces dans les matières grasses considérées.

On connaît également des procédés de microdistillation, inapplicables au niveau industriel, ou bien encore d'absorption sur colonnes comme ceux décrits par exemple dans les demandes de brevet européen n° 0 174 848 et n° 0 318 326. Ces demandes décrivent un procédé suivant lequel la matière grasse maintenue à l'état liquide passe au travers d'une colonne d'absorbant, en l'occurrence du charbon actif. Il est clair qu'un tel procédé est très lourd à mettre en oeuvre et de surcroît, l'extraction qu'il permet n'est pas très sélective.

Un autre procédé physico-chimique d'extraction du cholestérol des graisses est divulgué par la demande de brevet japonais n° 59 140 299. Il consiste à mettre en contact une matière chargée en cholestérol telle que la poudre de lait, avec du $CO_2$ supercritique à une température comprise entre 35 et 45° C et à une pression comprise entre 130 et 200 atm. L'obtention de ces conditions physiques nécessite l'emploi d'un matériel complexe et onéreux. La conduite du procédé en est ainsi très délicate. De plus, comme il est précisé dans la demande de brevet, d'autres composés lipidiques sont entrainés par le $CO_2$ supercritique. Ce procédé n'est donc pas sélectif.

Pour éliminer les stérols des graisses, il a été également imaginé un procédé de biodégradation desdits stérols divulgué par la demande de brevet européen n° 0 278 794. Ce procédé met en oeuvre des bactéries qui, mises au contact de la matière grasse, sont aptes à métaboliser les stérols qu'elle contient. Comme tous les procédés faisant intervenir des fermentations, ce procédé de biodégradation est très délicat à conduire du fait de la variabilité inhérente à la matière vivante. De plus, les matériels employés, la durée relativement longue sont, entre autres, des éléments qui rendent un tel procédé onéreux. Enfin, les catabolites produits lors de ces fermentations restent à ce jour totalement inconnus sur le plan de leur nature et de leur toxicité et sont, de toute façon, présents dans la matière grasse ainsi traitée.

On connait aussi par la demande de brevet européen n° 0 256 911, un procédé d'élimination du cholestérol contenu dans une matière grasse d'origine animale. Il est basé sur la propriété connue depuis 1958 qu'ont les cyclodextrines (polyglucoses cycliques de conformation tubulaire tronconique à 6, 7 ou 8 motifs de glucose et désignées respectivement par alpha, bêta ou gamma cyclodextrine) de recevoir dans leur cavité hydrophobe des molécules de stérols et notamment de cholestérol, pour former des complexes d'inclusion solubles dans l'eau. Selon ce procédé, la matière grasse maintenue fluide est mise en contact en milieu aqueux avec une cyclodextrine sous agitation et sous atmosphère non oxydante pendant 30 minutes à 10 heures de façon à permettre la formation de complexes. La séparation de ces derniers est ensuite réalisée par entrainement à l'eau, qui solubilise ces complexes. La solution aqueuse ainsi obtenue est ensuite recueillie après décantation. La phase lipidique obtenue doit être lavée à l'eau à plusieurs reprises pour éliminer les traces de complexes. Les conditions de mise en oeuvre de ce procédé apparaissent comme étant relativement astreignantes. L'une des principales contraintes à respecter est le maintien d'une atmosphère non oxydante à base d'azote pendant toute la durée de la mise en contact. Cette durée est d'ailleurs très longue en pratique, car si l'on se réfère aux exemples, on constate qu'elle est toujours au moins égale à 3 heures.

Le rendement d'extraction du cholestérol par ce procédé est peu élevé. Dans le meilleur des cas, en effet, il n'est que de 41 % et ce après trois extractions successives comme cela est indiqué dans l'exemple 3 de la description de cette demande de brevet européen.

La quantité d'eau nécessaire pour la mise en contact avant séparation ne représente pas moins de 1000 % en poids par rapport à la matière grasse à traiter.

Toujours sur le même principe d'utilisation des cyclodextrines pour l'extraction de stéroïdes, la demande de brevet européen n° 0 326 469 décrit un procédé d'élimination de composés stéroïdiques contenus dans une substance d'origine biologique. Suivant ce procédé, la substance d'origine biologique, fluidifiée s'il s'agit d'une matière grasse solide à température normale, est mise en contact avec une cyclodextrine en milieu aqueux. Le contact se déroule sous agitation pendant 5 heures à une température de l'ordre de 40° C. On procède ensuite à une séparation des complexes cyclodextrine/stéroïdes. Il faut noter qu'ici encore la durée réelle de mise en contact donnée dans tous les exemples est très longue : 5 heures minimum.

Les faibles rendements d'extraction des stérols donnés dans les exemples témoignent du manque d'efficacité de ce procédé.

Lors de la mise en contact avant séparation, le milieu réactionnel contient plus de 100 % en poids d'eau par rapport à la matière à traiter exprimée sur sec.

En second lieu, il a été envisagé des procédés d'extraction de composés mineurs gras autres que les stéroïdes.

Parmi ces procédés, on peut citer celui décrit dans le brevet US n° 3.491.132 et visant à réduire la teneur en acides gras libres d'huiles glycéridiques à l'aide de cyclodextrine. Dans ce cas, la cyclodextrine est mise en contact avec le milieu gras en présence d'importantes quantités d'eau qui varient de 200 à 1000 % par rapport au milieu gras traité.

Ces trois derniers procédés décrits dans les demandes de brevet européen n° 0 256 911 et 0 326 469 et le brevet US n° 3.491.132 ont en commun au moins un inconvénient important, à savoir qu'ils se déroulent en milieu aqueux et nécessitent de très grandes quantités d'eau pour la mise en contact.

Il est évident que l'utilisation de telles quantités d'eau constitue un handicap sur le plan industriel, puisque cela oblige à manipuler de grands volumes réactionnels et nécessite des équipements de grande capacité, donc encombrants et plus onéreux. Par ailleurs, outre le coût direct non négligeable que cela entraîne, il faut également considérer le traitement des effluents obtenus à l'issue de la séparation ; ce traitement représentant une charge d'autant plus importante que les quantités d'effluents augmentent.

Au vu de ce qui précède, force est de constater que les techniques d'extraction de composés mineurs gros à l'aide de cyclodextrine, qui pourtant sont les plus satisfaisantes, notamment au regard de la qualité des produits obtenus, n'ont pas été optimisées sur le plan de la rentabilité économique et technique.

Soucieuse de favoriser le progrès technique dans ce domaine, la demanderesse a mené de longues et nombreuses recherches au terme desquelles elle a eu le mérite de trouver qu'il était préférable et avantageux d'effectuer la aise en contact à une température à laquelle le mélange matière biologique à traiter/cyclodextrine/eau se trouve à l'état semi-solide, c'est-à-dire dans un état où les corps contenus dans ladite matière ne sont pas tous liquides.

Elle a également démontré qu'il était préférable lorsque les corps gras sont liquides ou solides, de faire en sorte que la cyclodextrine se trouve toujours dans le milieu d'extraction sous une forme non dissoute. Ceci a fait l'objet d'une autre demande internationale de brevet parallèle publiée sous le n° WO-A-92/04431.

La présente invention concerne ainsi un procédé d'extraction de composés mineurs gras, notamment de stéroïdes, et plus particulièrement de cholestérol, contenus dans une matière d'origine biologique, à l'aide de cyclodextrine, dans lequel la cyclodextrine est mise en contact, sous agitation et dans un milieu réactionnel comprenant de l'eau, avec la matière à traiter de façon à permettre la formation de complexes d'inclusion entre la cyclodextrine et les composés mineurs gras, ces complexes étant ensuite séparés de ladite matière, le procédé étant caractérisé en ce que la mise en contact cyclodextrine/matière à traiter s'effectue à une température choisie de telle sorte que les corps gras contenus dans ladite matière se trouvent à l'état figé.

Par état figé, on entend au sens de la présente invention, un état dans lequel le taux de corps gras solides ou cristallins est supérieur ou égal à 5 % en poids.

Ce taux de corps gras solides est une grandeur usuelle dans le domaine de la technologie des lipides. Il se mesure par Résonance Magnétique Nucléaire basse résolution, à l'aide de minispectromètres à impulsions.

La RMN à impulsions, basée sur le fait que les molécules de corps gras dans la phase liquide ont un degré de mobilité supérieur à celui des molécules de la phase solide, permet de déterminer le pourcentage de matière grasse solide ou liquide. Le principe et les applications de cette méthode sont décrits par exemple dans la revue R.I.B.C. de Janvier-Février 1985 n° 80, pages 23 à 26, ou dans la revue I-A-A de Mai 1988, pages 463 à 471 ou de Juin 1988, pages 463 à 470.

Contrairement à ce qui est préconisé par l'art antérieur et notamment dans les demandes de brevet européen n° 0 256 911 et 0 326 469 et le brevet US n° 3.491.132 précités, la demanderesse a mis en évidence que, de façon surprenante et inattendue, l'état figé des corps gras entrant dans la constitution de la matière à traiter correspond à un état avantageux pour la complexation des composés mineurs gras, notamment des stéroïdes, avec la cyclodextrine au stade de la mise en contact sous agitation.

De préférence, les conditions opératoires sont choisies de telle manière que le taux de substances grasses solides soit supérieur ou égal à 10 % et plus préférentiellement encore supérieur ou égal à 30 %.

Conformément à une disposition avantageuse de la présente invention, la quantité d'eau présente dans le milieu réactionnel lors de la mise en contact et avant séparation est inférieure à 100 % en poids, de préférence comprise entre 10 et 90 %, et plus préférentiellement encore comprise entre 20 et 60 % en poids par rapport à la matière à traiter exprimée sur sec.

En limitant ainsi les quantités d'eau employées, on diminue de façon notable tous les coûts de mise en oeuvre du procédé d'extraction, tout en le rendant d'utilisation plus souple et plus aisée.

Qui plus est, les rendements d'extraction sont améliorés pour des durées de mise en contact plus courtes, et les quantités d'effluents recueillis, donc à retraiter, sont sensiblement abaissées. Ces effluents se présentent sous forme concentrée, ce qui limite les coûts de transport et de retraitement.

La cyclodextrine utilisée peut être du type alpha, bêta ou gamma, de préférence bêta, substituée ou non. Les groupements mono- ou poly-substituants de la cyclodextrine peuvent être notamment des groupes alkyle tels que le groupe hydroxypropyle ou éthyle, ou des saccharides du type glycosyle, maltosyle ou autres. On peut choisir également de la cyclodextrine rendue insoluble dans l'eau, par exemple par polymérisation.

Avantageusement, la cyclodextrine est mise en oeuvre dans le procédé suivant l'invention sous forme pulvérulente. On utilise de préférence une cyclodextrine ayant une teneur en eau inférieure ou égale à 11 % en poids, de préférence à 7 % en poids, et plus préférentiellement encore à 5 % en poids. Elle peut cependant être utilisée après réhydratation jusqu'à une teneur en eau inférieure ou égale à 15 % en poids.

Il est intéressant de noter que la mise en contact se déroule sous atmosphère ambiante. En effet, les conditions du procédé ne sont pas sévères et ne risquent pas d'entrainer des dégradations comme l'oxydation sur les composés gras sensibles (acides gras insaturés). Et mieux encore, la cyclodextrine permet en plus d'éliminer au moins partiellement les éventuels composés prooxydants indésirables.

Suivant un mode préféré de mise en oeuvre, la matière à traiter, l'eau - si ladite matière à traiter n'en contient pas ou pas assez - et ensuite la cyclodextrine, de préférence sous forme pulvérulente, sont mises en présence dans un mélangeur équipé de moyens de malaxage. La séquence d'introduction des produits est de préférence celle indiquée ci-dessus, mais on peut aussi, parmi toutes les variantes possibles, prémélanger par exemple la matière à traiter et l'eau.

Avantageusement, le mélange se présente sous une forme pâteuse que l'on soumet, pendant toute la durée de mise en contact, à une opération de malaxage au cours de laquelle intervient la formation de complexes cyclodextrine/composés mineurs gras.

Pour la séparation de ceux-ci, et il s'agit là aussi d'une autre originalité de mise en oeuvre du procédé suivant l'invention, la pâte malaxée est portée à une température choisie de telle sorte que les corps gras constituant la matière à traiter se trouvent à l'état fondu, c'est-à-dire dans un état caractérisé par un taux de corps gras solides ou cristallins inférieur à 1 % en poids.

Cette transformation à l'état fondu permet d'obtenir, d'une part, une phase contenant les corps gras et à teneur réduite en composés mineurs gras et, d'autre part, une phase mixte hydrolipidique contenant les complexes d'inclusion cyclodextrine/composés mineurs gras.

Ces deux phases se séparent parfaitement bien l'une de l'autre et il est donc aisé de recueillir la phase grasse exempte de composés mineurs gras, qui peut ensuite être employée dans diverses applications. La phase mixte peut quant à elle être retraitée pour en extraire les composés mineurs gras susceptibles d'être valorisés, notamment dans le domaine pharmaceutique ou cosmétique.

Lorsque la matière à traiter est une matière animale et/ou végétale à forte teneur en lipides comme par exemple le beurre, concentré ou non, le suif, le saindoux, les graisses de volailles, les lanolines, les huiles végétales hydrogénées, les graisses de palme ou de coprah, les margarines..., elle est introduite dans un dispositif de malaxage du type pétrin équipé de moyens de régulation de la température.

On y incorpore ensuite éventuellement de l'eau dans la mesure où la matière d'origine biologique à traiter n'en contient pas suffisamment pour la mise en oeuvre du procédé conformément à l'invention. La quantité d'eau nécessaire est de préférence comprise entre 20 et 60 % en poids par rapport à la matière d'origine biologique à traiter, exprimée en sec.

Puis on ajoute la cyclodextrine, de préférence sous forme pulvérulente et en quantité suffisante pour former des complexes d'inclusion avec les composés mineurs gras à extraire.

La détermination de la quantité adéquate de cyclodextrine à utiliser est fonction de la quantité de composés mineurs gras à extraire, et de leurs affinités pour la cyclodextrine . En règle générale, la quantité de cyclodextrine est de 0,5 % à 15 % par rapport à la matière d'origine biologique à traiter exprimée en sec, de préférence de 1 à 10 % et plus préférentiellement de 3 à 8 %.

Le malaxage de la pâte formée par le mélange de ces constituants est effectué à une température maintenue constante par les moyens de régulation et choisie de telle sorte que la matière grasse soit à l'état figé avec un taux de corps gras solides ou cristallins supérieur à 5 %, de préférence supérieur à 10 % et plus préférentiellement compris entre 30 et 50 % en poids. Pour le beurre concentré par exemple, la température est choisie de préférence environ entre 10 et 25° C.

Au bout d'un temps variable, généralement compris entre 10 et 120 mn, le malaxage est interrompu et la pâte est chauffée suffisamment pour que le taux de solides de la matière grasse soit inférieur à 1 % en poids. Il se forme alors un culot hydrolipidique contenant les complexes et un surnageant liquide huileux constitué par la matière grasse à teneur réduite en composés mineurs gras.

En ce qui concerne ce mode de mise en oeuvre du procédé suivant l'invention, il est à noter que celui-ci peut parfaitement s'intégrer dans le cadre de la fabrication de beurre à partir de crème. Cette dernière comprend essentiellement les étapes suivantes :

- maturation biologique ou physique (procédé NIZO) de la crème ;
- barattage continu ou discontinu avec inversion d'émulsion et séparation du babeurre ;
- malaxage éventuellement avec maturation biologique (procédé NIZO) ;

- éventuellement lavage à l'eau.

Conformément à l'invention, la cyclodextrine peut être ajoutée après séparation du babeurre, au cours du malaxage. Au terme d'une mise en contact qui s'effectue à la température de barattage (inférieure à 15° C), on procède à la séparation des complexes d'inclusion formés par passage à l'état fondu.

Le procédé selon l'invention permet l'extraction des stéroïdes et en particulier des stérols avec des rendements atteignant environ 90 % en un seul traitement. Ces rendements peuvent être améliorés en multipliant les traitements. Ces performances d'extraction sont obtenues de façon économique et aisée en un temps relativement court.

Un autre intérêt du procédé conforme à l'invention est qu'il peut permettre l'extraction successive d'un certain nombre de composés mineurs gras à partir d'une matière d'origine biologique en agissant dans un ordre déterminé sur un ou plusieurs paramètres essentiels du procédé, à savoir notamment la température de mélange ou de malaxage, la quantité d'eau présente au moment de l'étape de complexation, la température de déphasage, le pH du milieu.

Le procédé suivant l'invention peut s'appliquer aux corps gras naturels constitués essentiellement par des triglycérides, mais pauvres en phospholipides totaux : c'est-à-dire ayant une teneur en phospholipides totaux inférieure à 10 % en poids par rapport aux lipides totaux.

Ce procédé permet notamment l'extraction de stéroïdes, comme le cholestérol, de nombreuses matières biologiques. Il peut s'agir de matières grasses animales et/ ou végétales parmi lesquelles on peut citer :

- les matières grasses laitières telles que le beurre, concentré ou non ;
- les matières grasses animales telles que le suif, le saindoux, la graisse de cheval, les graisses de volailles, les huiles de poissons, la lanoline ;
- les matières grasses végétales comme les matières grasses végétales hydrogénées, l'huile de palme, l'huile de coprah, le beurre de cacao ;
- et les mélanges de celles-ci comme les margarines.

En plus de l'élimination de ces composés dans des produits alimentaires, le procédé conforme à l'invention offre une source intéressante de stéroïdes susceptibles d'être utilisés dans la préparation de principes pharmaceutiques notamment hormonaux et vitaminiques, ou dans l'industrie cosmétique comme émulsifiants.

Il va de soi que l'invention ne se limite pas aux modes de mise en oeuvre décrits ci-dessus, mais au contraire en englobe toutes les variantes.

Les exemples qui suivent permettront de mieux comprendre le procédé selon la présente invention en mettant en évidence tous les avantages qu'il procure.

## EXEMPLE I

Extraction de stérols, et plus particulièrement de cholestérol, contenus dans un beurre concentré conformément au procédé suivant l'invention.

Le beurre concentré employé a une richesse en matières grasses de l'ordre de 99,9 %. On choisit par exemple le beurre concentré standard commercialisé par la Société CORMAN (Belgique).

La cyclodextrine est une bêta cyclodextrine du type de celle commercialisée par la demanderesse sous la marque déposée KLEPTOSE et se présentant sous la forme d'une poudre blanche à 12 % d'humidité environ.

### 1. Mise en contact

300 g de beurre concentré sont introduits dans la cuve d'un pétrin malaxeur du type de ceux commercialisés par la Société KUSTNER. La cuve du malaxeur est pourvue d'une double paroi dans laquelle peut circuler un fluide régulateur de la température. Le malaxeur est mis en fonctionnement et la température est consignée à une valeur moyenne de 14° C environ. A cette température, le beurre concentré possède un taux de corps gras solides de 28 % environ.

On ajoute ensuite successivement 150 g d'eau et 5,70 g de cyclodextrine KLEPTOSE. La mise en contact se déroule alors pendant 30 minutes.

2. Séparation des complexes d'inclusion

Le mélange pâteux beurre concentré/eau/cyclodextrine retiré du malaxeur est chauffé à une température de l'ordre de 37° C (taux de corps gras solides du beurre concentré inférieur à 1 %). Il se produit spontanément un déphasage et on obtient un culot pâteux contenant notamment les complexes d'inclusion et de l'eau. Ce culot est surmonté d'une phase huileuse formée par le beurre concentré décholestérolisé. On peut alors recueillir plus de 94 % en poids du beurre concentré mis en oeuvre.

Le cholestérol est dosé par méthode colorimétrique, après oxydation en cholesténone par la cholestérol-oxydase, suivant la méthode et avec les réactifs référencés n° 139 050 de la Société BOEHRINGER Mannheim.

La teneur initiale en cholestérol du beurre concetré est de 0,270 % en poids.

La teneur finale est de 0,038 %.

Le rendement d'extraction s'élève donc à 86 %.

Une deuxième extraction conduite dans les mêmes conditions procure un rendement de 74 %, ce qui donne un rendement global de 96 %.

On constate que les performances du procédé suivant l'invention sont tout à fait remarquables tant sur le plan quantitatif que sur celui de la durée.

La quantité d'eau employée est tout à fait minime et ne pose pas de problème de manipulation.

Le culot pâteux qui contient de l'eau utilisée ne représente que 173 g. Cette quantité minime et concentrée ne pose pas de problème quant à son retraitement.

EXEMPLE II

Extraction de stérols, et plus particulièrement de cholestérol, contenus dans le beurre conformément à l'invention.

Dans cet exemple, on a réalisé 9 essais d'extraction de stérols du beurre concentré en employant les mêmes équipements et en respectant le même protocole que dans l'exemple I. On a simplement fait varier certains paramètres expérimentaux. Les données et résultats de ces essais sont présentés dans le tableau I qui suit :

## TABLEAU I

| Essais | Eau % (1) | ml | Température moyenne en °C | CD* kleptose % (2) | g | Temps de mise en contact en minutes | Rendement d'extraction cholesterol final/ cholestérol initial en % |
|---|---|---|---|---|---|---|---|
| 1 | 20 | 60 | 15 | 5 | 15 | 30 | 65 |
| 2 | 30 | 90 | 15 | 5 | 15 | 30 | 85 |
| 3 | 50 | 150 | 15 | 5 | 15 | 30 | 84 |
| 4 | 100 | 300 | 15 | 5 | 15 | 30 | 75 |
| 5 | 50 | 150 | 16 | 7 | 21 | 30 | 93 |
| 6 | 50 | 150 | 16 | 5 | 15 | 15 | 75 |
| 7 | 50 | 150 | 26,5 | 5 | 15 | 30 | 65 |
| 8 | 50 | 150 | 16 | 3 | 9 | 30 | 59 |
| 9 | 50 | 150 | 16 | 3 | 9 | 120 | 55 |

\* CD = cyclodextrine

(1) % par rapport au beurre concentré

(2) % par rapport au beurre concentré

Commentaires du Tableau I

En comparant les résultats des essais 1 à 4 qui ne se différencient que par la quantité d'eau mise en oeuvre, on constate que le rendement d'extraction en cholestérol exprimé en % est maximum pour des teneurs en eau comprises entre 30 et 50 % par rapport au beurre concentré. L'augmentation de la teneur

8

en eau fait chuter le rendement d'extraction.

En comparant les résultats des essais 3 et 5 pour lesquels seule la concentration en cyclodextrine KLEPTOSE diffère (respectivement 5 et 7 % par rapport au beurre concentré), on constate qu'il est possible d'augmenter le rendement d'extraction de 9 % uniquement en augmentant la concentration en cyclodextrine de 2 %.

Dans l'essai 6 la durée de malaxage a été réduite à 15 minutes. Le rendement obtenu est de 75 %, ce qui constitue un résultat très satisfaisant.

Pour l'essai 7, la température de mise en contact a été élevée à 26,6° C. En réduisant le taux de solides dans le beurre concentré, on réduit le rendement d'extraction en cholestérol (65 % contre 84 % pour l'essai 3).

En utilisant 3 % de cyclodextrine par rapport au beurre concentré (essais 8 et 9) on constate qu'au-delà de 30 mn une prolongation du malaxage ne permet pas d'augmenter les rendements.

EXEMPLE III

Extraction de stérols, et plus particulièrement de cholestérol, contenus dans du beurre conformément au procédé suivant l'invention.

Le beurre employé dans cet exemple est un beurre du commerce contenant 82 % de matières grasses.

La cyclodextrine, les équipements ainsi que le protocole sont les mêmes que pour les exemples précédents, la seule différence étant que l'on n'ajoute pas d'eau : c'est le beurre lui-même qui apporte l'eau nécessaire à la complexation.

Les données et résultats de cet exemple sont indiqués dans le Tableau II suivant :

TABLEAU II

| | Eau | | Température moyenne (°C) | CD KLEPTOSE | | Durée mise en contact | Rendement d'extraction en % |
|---|---|---|---|---|---|---|---|
| | % par rapport à la MG (*) | g | | % par rapport à la MG (*) | g | | |
| Beurre 150g | 20,5 | 25,5 | 12 | 5 | 7,5 | 45 | 80 |

(*) MG = Matière Grasse

On montre ici que le procédé suivant l'invention est également efficace sur une matière à traiter contenant initialement de l'eau dans une quantité conforme aux caractéristiques de la présente invention.

EXEMPLE IV

Extraction de stérols, et plus particulièrement de cholestérol, contenus dans du suif, conformément au procédé suivant l'invention.

On traite 200 g de suif à 99 % de matières grasses, du type de celui commercialisé par la Société ROUSSELOT, de la même façon que dans les exemples précédents.

La teneur initiale en cholestérol du suif est de 0,12 % en poids.

Le Tableau III ci-après expose les données et les résultats du présent exemple.

TABLEAU III

| | Eau | | Température moyenne (°C) | CD KLEPTOSE | | Durée mise en contact | Rendement d'extraction en % |
|---|---|---|---|---|---|---|---|
| | % par rapport à la MG (*) | g | | % par rapport à la MG (*) | g | | |
| Suif 200 g | 50 | 100 | 16 | 3 | 6 | 30 | 83 |
| | | | | | | 60 | 82 |
| | 25 | 50 | 16 | 3 | 6 | 30 | 86 |
| | | | | | | 60 | 84 |

(*) MG = Matière Grasse

Commentaires du Tableau III

Il apparait qu'une quantité d'eau de 25 % en poids par rapport au suif est suffisante pour extraire 86 % du cholestérol initial, et ce avec seulement 3 % en poids de cyclodextrine par rapport au suif.

Une augmentation de la quantité d'eau et/ou de la durée de mise en contact ne permet pas d'améliorer ce rendement d'extraction.

Dans cet exemple, on a également mesuré les variations des indices d'acide. L'indice d'acide est défini par le nombre de mg de potasse nécessaire pour neutraliser l'acidité de 1 g de suif. L'indice d'acide du suif avant extraction est de 0,85.

Le tableau IV ci-après présente les résultats obtenus.

TABLEAU IV

| | Eau, en % par rapport au suif | Température °C | CD Kleptose,en % par rapport au suif | Durée mise en contact | Indice d'acide final | % de réduction de l'indice |
|---|---|---|---|---|---|---|
| Suif 200g | 50 | 26 | 3 | 30 | 0,65 | 30 |
| | 25 | 16 | 3 | 30 | 0,12 | 86 |

On montre ici que la diminution de l'indice d'acide, donc de la teneur en acides gras libres, du suif est très marquée avec 25 % d'eau.

**Revendications**

1. Procédé d'extraction de composés mineurs gras, notamment de stéroïdes, contenus dans une matière d'origine biologique à l'aide de cyclodextrine, dans lequel la cyclodextrine est mise en contact, sous agitation et dans un milieu réactionnel comprenant de l'eau, avec la matière à traiter de façon à permettre la formation de complexes d'inclusion entre la cyclodextrine et les composés mineurs gras, ces complexes étant ensuite séparés de ladite matière, caractérisé en ce que la mise en contact cyclodextrine/matière à traiter s'effectue à une température choisie de telle sorte que les corps gras contenus dans ladite matière se trouvent à l'état figé c'est-à-dire un état dans lequel le taux de corps gras solides ou cristallins est supérieur ou égal à 5 % en poids.

2. Procédé selon la revendication 1, caractérisé en ce que la température est choisie de telle sorte que le taux de corps gras solides ou cristallins soit de préférence supérieur ou égal à 10 % et plus préférentiellement encore à 30 %.

3. Procédé selon la revendication 1 ou la revendication 2, caractérisé en ce que la quantité d'eau présente dans le milieu réactionnel est inférieure à 100 %, de préférence comprise entre 10 % et 90 %, et plus préférentiellement encore entre 20 et 60 % en poids par rapport à la quantité de matière d'origine biologique à traiter exprimée en sec.

4. Procédé selon l'une quelconque des revendications 1 à 3, caractérisé en ce que la cyclodextrine est une bêta cyclodextrine, substituée ou non.

5. Procédé selon l'une quelconque des revendications 1 à 4, caractérisé en ce que la cyclodextrine est mise en oeuvre sous forme pulvérulente et en ce qu'elle se présente avec une teneur en eau inférieure ou égale à 11 % en poids, de préférence à 7 % en poids, et plus préférentiellement encore à 5 % en poids.

6. Procédé selon l'une quelconque des revendications 1 à 5, caractérisé en ce que le mélange matière à traiter/eau/cyclodextrine se présente sous une forme pâiteuse que l'on soumet, pendant la durée de la mise en contact, à une opération de malaxage au cours de laquelle se forment des complexes cyclodextrine/composés mineurs gras.

7. Procédé selon l'une quelconque des revendications 1 à 6, caractérisé en ce que la séparation des complexes d'inclusion cyclodextrine/composés mineurs gras est réalisée en portant le mélange à une température choisie de telle sorte que les corps gras contenus dans la matière d'origine biologique à traiter se trouvent à l'état fondu, c'est-à-dire dans un état où le taux de corps gras solides ou cristallins est inférieur à 1 % en poids, ce grâce à quoi une phase grasse surnageante à teneur réduite en composés mineurs gras se sépare d'une phase mixte hydrolipidique contenant les complexes d'inclusion cyclodextrine/composés mineurs gras.

8. Procédé selon l'une quelconque des revendications 1 à 7, caractérisé en ce que la quantité de cyclodextrine utilisée est comprise entre 0,5 et 15 % de préférence entre 1 et 10 % et plus préférentiellement encore entre 3 et 8 % par rapport à la quantité de matière d'origine biologique à traiter exprimée en sec.

**Claims**

1. Process for extracting minor fatty compounds, especially steroids, which occur in a substance of biological origin, using cyclodextrin, in which the cyclodextrin is placed in contact, with stirring and in a reaction medium containing water, with the substance to be treated so as to allow the formation of inclusion complexes between the cyclodextrin and the minor fatty compounds, these complexes being subsequently separated from the said substance, characterised in that the placing in contact of cyclodextrin/substance to be treated is carried out at a temperature which is chosen such that the fatty substances present in the said substance are in a congealed state that is to say a state in which the level of solid or crystalline fatty substances is greater than or equal to 5% by weight.

2. Process according to Claim 1, characterised in that the temperature is chosen such that the level of solid or crystalline fatty substances is preferably greater than or equal to 10%, and still more preferably greater than or equal to 30%.

3. Process according to Claim 1 or Claim 2, characterised in that the amount of water present in the reaction medium is less than 100%, preferably between 10 and 90%, and still more preferably between 20 and 60%, by weight relative to the amount of substance of biological origin to be treated, expressed on a dry basis.

4. Process according to any one of Claims 1 to 3, characterised in that the cyclodextrin is a beta cyclodextrin which is substituted or unsubstituted.

5. Process according to any one of Claims 1 to 4, characterised in that the cyclodextrin is used in pulverulent form and in that it has a water content of less than or equal to 11% by weight, preferably less than or equal to 7% by weight, and still more preferably less than or equal to 5% by weight.

6. Process according to any one of Claims 1 to 5, characterised in that the substance to be treated/water/cyclodextrin mixture is provided in a paste form which is subjected, during the period of placing in contact, to a kneading operation during which cyclodextrin/minor fatty compound complexes are formed.

7. Process according to any one of claims 1 to 6, characterised in that the separation of the cyclodextrin/minor fatty compound inclusion complexes is carried out by heating the mixture to a temperature which is chosen such that the fatty substances present in the substance of biological origin to be treated are in a molten state, that is to say in a state wherein the level of solid or crystalline fatty substances is less than 1% by weight, by virtue of which a supernatant fatty phase with a reduced content of minor fatty compound is separated from a mixed water-lipid phase containing the cyclodextrin/ minor fatty compound inclusion complexes.

8. Process according to any one of Claims 1 to 7, characterised in that the amount of cyclodextrin used is between 0.5 and 15%, preferably between 1 and 10%, and still more preferably between 3 and 8% relative to the amount of substance of biological origin to be treated expressed on a dry basis.

## Patentansprüche

1. Verfahren zur Extraktion von Nebenfettverbindungen, insbesondere von Steroiden, aus einer Substanz biologischer Herkunft mit Hilfe von Cyclodextrin, wobei das Cyclodextrin unter Rühren und in einem Wasser umfassenden Reaktionsmedium mit der zu behandelnden Substanz in Kontakt gebracht wird, so daß die Bildung von Einschlußkomplexen zwischen Cyclodextrin und den Nebenfettverbindungen ermöglicht wird, und diese Komplexe anschließend von der genannten Substanz abgetrennt werden, dadurch gekennzeichnet, daß das In-Kontakt-Bringen zwischen Cyclodextrin und zu behandelnder Substanz bei einer solchen Temperatur erfolgt, daß sich die in der genannten Substanz enthaltenen Fettkörper in einem erstarrten Zustand befinden, das heißt in einem Zustand, bei dem der Gehalt an festen oder kristallinen Fettkörpern höher oder gleich 5 Gew.-% beträgt.

2. Verfahren nach Anspruch 1, dadurch gekennzeichnet, daß die Temperatur in der Weise gewählt wird, daß der Gehalt an festen oder kristallinen Fettkörpern vorzugsweise höher oder gleich 10 % und ganz besonders bevorzugt 30 % beträgt.

3. Verfahren nach Anspruch 1 oder Anspruch 2, dadurch gekennzeichnet, daß die in dem Reaktionsmedium anwesende Wassermenge niedriger als 100 Gew.-%, vorzugsweise zwischen 10 und 90 Gew.-% und ganz besonders bevorzugt zwischen 20 und 60 Gew.-% liegt, bezogen auf die Menge an zu behandelnder Substanz biologischer Herkunft, ausgedrückt in Trockensubstanz.

4. Verfahren nach irgendeinem der Ansprüche 1 bis 3, dadurch gekennzeichnet, daß das Cyclodextrin ein substituiertes oder unsubstituiertes $\beta$-Cyclodextrin ist.

5. Verfahren nach irgendeinem der Ansprüche 1 bis 4, dadurch gekennzeichnet, daß das Cyclodextrin in Pulverform eingesetzt wird und daß es einen Wassergehalt von niedriger oder gleich 11 Gew.-%, vorzugsweise von 7 Gew.-% und ganz besonders bevorzugt von 5 Gew.-% aufweist.

6. Verfahren nach irgendeinem der Ansprüche 1 bis 5, dadurch gekennzeichnet, daß die Mischung zwischen zu behandelnder Substanz, Wasser und Cyclodextrin in einer pastösen Form vorliegt, die während der Dauer des In-Kontakt-Bringens einem Knetvorgang unterzogen wird, in dessen Verlauf sich Komplexe zwischen Cyclodextrin und den Nebenfettverbindungen bilden.

7. Verfahren nach irgendeinem der Ansprüche 1 bis 6, dadurch gekennzeichnet, daß die Abtrennung der Einschlußkomplexe zwischen Cyclodextrin und den Nebenfettverbindungen in der Weise realisiert wird, daß man die Mischung auf eine solche Temperatur bringt, bei der sich die in der zu behandelnden Substanz biologischer Herkunft enthaltenen Fettkörper im geschmolzenen Zustand befinden, das heißt in einem Zustand, wo der Gehalt an festen oder kristallinen Fettkörpern niedriger als 1 Gew.-% liegt, aufgrunddessen sich eine aufschwimmende fette Phase mit einem reduzierten Gehalt an Nebenfettverbindungen von einer gemischten hydrolipidischen Phase abscheidet, die die Einschlußkomplexe zwischen Cyclodextrin und den Nebenfettverbindungen enthält.

8. Verfahren nach irgendeinem der Ansprüche 1 bis 7, dadurch gekennzeichnet, daß die Menge an verwendetem Cyclodextrin zwischen 0,5 und 15 %, vorzugsweise zwischen 1 und 10 % und ganz besonders bevorzugt zwischen 3 und 8 % liegt, bezogen auf die Menge an zu behandelnder Substanz biologischer Herkunft, ausgedrückt in Trockensubstanz.